# EUROPEAN PATENT APPLICATION

(11) **EP 1 912 336 A2**
(43) Date of publication of application: **16.04.2008**
(21) Application number: 07118162.2
(22) Date of filing: 09.10.2007
(51) Int. Cl.: H04B 1/00, H04B 1/38

(54) **Avonics communication system and method utilizing multi-channel radio technology and a shared data bus**

(30) Priority: 10.10.2006 US 828822 P; 26.04.2007 US 740566
(71) Applicant: Honeywell International, Inc., Morristown, NJ 07962 (US)
(72) Inventor: Hunter, Jeffrey K., Olathe, KS 66062 (US)
(74) Representative: Buckley, Guy Julian

(57) **Abstract**

An avionics communication system and method uses multi-channel radios. The system includes a plurality of multi-channel radios and a processor in signal communication with the multi-channel radios that is capable of sending at least one signal to at least one of an audio panel or an avionics control computer based on applying predefined channel switching logic to the channels received by the multi-channel radios. The method includes receiving a first signal from a first multi-channel radio at a processor, receiving a second signal from a second multi-channel radio at the processor, and sending at least one signal from the processor to at least one of an audio panel or an avionics control computer based on applying predefined channel switching logic to the first and second signals. The receive and transmit function on a given channel need not be accomplished by the same radio.

## Description

### BACKGROUND OF THE INVENTION

Present systems have dedicated single channel radios that are capable of a fixed channel transmit/receive (TX/RX) function. A typical large airplane will have 3 radios that are each dedicated to a distinct single channel. As one of these radios transmits, that radio, and possibly another of the radios with a nearby mounted antenna momentarily lose receive capability during that transmission. If there is a failure of a radio, or if a radio's antenna location (bottom of the airplane while on the ground etc) causes a loss of reception on one or more radios, the pilot must quickly manually change radio settings to restore functionality. Also, each radio has a dedicated audio/data path that must be controlled by the pilot. The pilot must therefore manually change radio channels (frequencies) and the corresponding radio's configuration (Very High Frequency (VHF) Digital Link (VDL) vs. audio), as well as audio settings to make these adjustments.

### SUMMARY OF THE INVENTION

An avionics communication system uses multi-channel radios. In an exemplary non-limiting embodiment, the system includes a plurality of multi-channel radios and a processor in signal communication with the multi-channel radios that is capable of sending at least one signal to at least one of an audio panel or an avionics control computer based on applying predefined channel switching logic to the channels received by the multi-channel radios.

In accordance with other aspects of the invention, the system includes a radio frequency (RF) combiner/splitter in signal communication with at least two of the multi-channel radios such that a single combined received signal is split by the RF combiner/splitter and sent to the at least two multi-channel radios in signal communication with the RF combiner/splitter.

In accordance with further aspects of the invention, an exemplary method for conducting radio frequency communications using an avionics system that includes a plurality of multi-channel radios includes receiving a first signal from a first multi-channel radio at a processor, receiving a second signal from a second multi-channel radio at the processor, and sending at least one signal from the processor to at least one of an audio panel or an avionics control computer based on applying predefined channel switching logic to the first and second signals.

### BRIEF DESCRIPTION OF THE DRAWINGS

Preferred and alternative embodiments of the present invention are described in detail below with reference to the following drawings:

FIGURE 1 is a block diagram showing an avionics communications system using multi-channel radios formed in accordance with an embodiment of the invention;

FIGURE 2 is a block diagram showing an avionics communications system using multi-channel radios formed in accordance with an alternate embodiment of the invention; and

FIGURE 3 is a block diagram showing a data bus format used in an embodiment of the invention.

### DETAILED DESCRIPTION OF THE PREFERRED EMBODIMENT

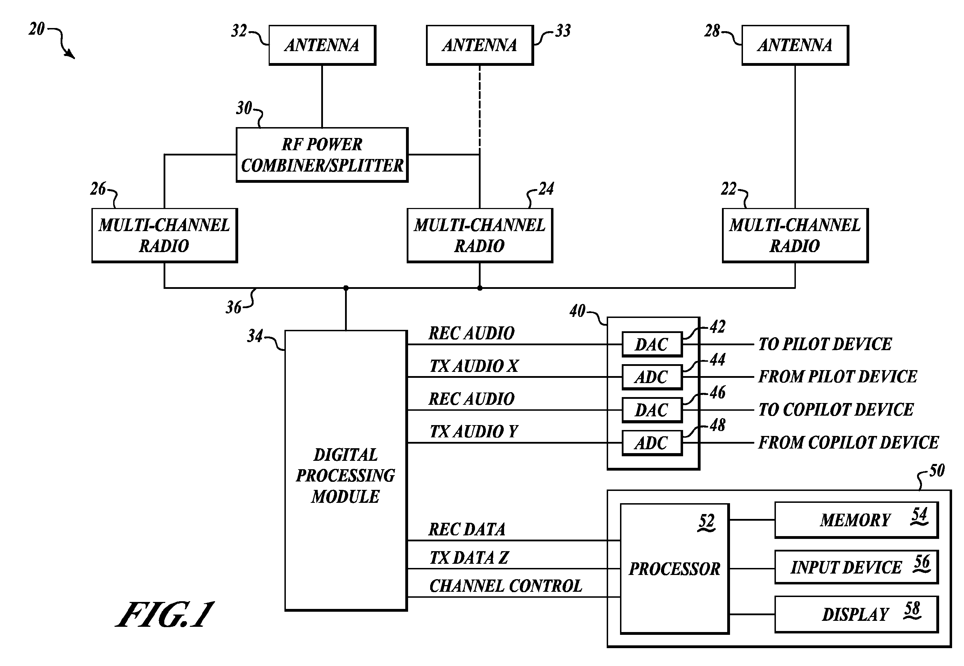

FIGURE 1 is a block diagram showing an avionics communications system 20 using multi-channel radios formed in accordance with an example embodiment of the invention. The system 20 includes a first multi-channel radio (MCR) 22, a second MCR 24, and a third MCR 26. In one non-limiting embodiment, each MCR is a Multi Mode Digital Radio (MMDR) model KTR 2280 available from Honeywell, Inc. The KTR 2280 includes three simultaneous receivers and one transmitter. However, other MCRs may be used that contain a minimum of at least two simultaneous receivers and one transmitter. In industry, the MCRs are also referred to as multimode digital sensors (MMDS). The first MCR 22 is in signal communication with a first antenna 28. The second MCR 24 and the third MCR 26 are in signal communication over a first connection and a second connection, respectively, with a radio frequency (RF) power combiner/splitter 30 that is in signal communication with a second antenna 32. The first, second, and third MCRs 22, 24, and 26 are in signal communication with a digital processing module (DPM) 34 using a data bus 36. In an example embodiment, the DPM 34 includes a digital signal processor (not shown).

Although only two antennas 28, 32 are used in this embodiment, more antennas are used in other embodiments, such as by having one top mounted antenna and two bottom mounted antennas, for example. In the case of one top mounted and two bottom mounted antennas, priority may be given to routing transmissions from the top mounted antenna because it has increased isolation from the other two antennas, resulting in less disruption to them as it transmits. In an alternate embodiment that uses three antennas, the RF power combiner/splitter 30 is not included, the second MCR 24 is in signal communication with a third antenna 33 (shown by the dotted line in FIGURE 1) rather than the second antenna 32, and the third MCR 26 is in signal communication with the second antenna 32 (connection not shown).

The DPM 34 is in signal communication with an audio panel 40. The audio panel includes a first digital to analog converter (DAC) 42, a first analog to digital converter (ADC) 44, a second DAC 46, and a second ADC 48. However, in other embodiments, the DACs 46, 46 or the ADCs 44, 48 are not included because any analog-to-digital or digital-to-analog conversion is performed in other devices. In the example shown, the DPM 34 is in signal communication with the audio panel 40 using two receiving (REC) lines and two transmitting (TX) lines. A first REC audio line from the DPM 34 enters the first DAC 42 which converts signals received on the line to analog form before sending an output to a pilot device (not shown) such as a headset that includes a speaker, for example. In similar fashion, a second REC audio line from the DPM 34 enters the second DAC 46 which is in signal communication with a co-pilot device (not shown). The pilot device, such as a headset that includes a microphone, is also in signal communication with the first ADC 44 which receives signals from the pilot device and converts the received signals to digital form before sending an output to the DPM 34 over a line labeled TX Audio X. In similar fashion, the co-pilot device is also in signal communication with the second ADC 48 which receives signals from the co-pilot device and converts the received signals to digital form before sending an output to the DPM 34 over a line labeled TX Audio Y. Differing numbers of lines or alternate forms of signal communication are used in other embodiments.

The DPM 34 is also in signal communication with an avionics display and control computer 50. The display and control computer 50 includes a processor 52 that is in signal communication with a memory unit 54, an input device 56, and a display 58 in an example embodiment. In the example shown, the DPM 34 is in signal communication with the processor 52 using a receive data line (REC Data), a transmit data line (TX Data Z), and a channel control line. Differing numbers of lines or alternate forms of signal communication are used in other embodiments. Although the audio panel 40 and the avionics display and control computer 50 are shown as separate components, they are combined into an integrated component in other embodiments.

In an example embodiment, a method for conducting RF communications includes receiving a first signal from the first MCR 22 at the DPM 34, the first signal corresponding to at least a first channel and a second channel. The method further includes receiving a second signal from the second MCR 24 at the DPM 34, the second signal corresponding to at least a third channel and a fourth channel. In some embodiments, the first and second channels are the same as the third and fourth channels, respectively so that continuity of transmission is maintained when switching logic determines that it is advantageous to switch from one MCR to another. However, in other embodiments, some or all of the channels on each MCR are different from the channels on other MCRs.

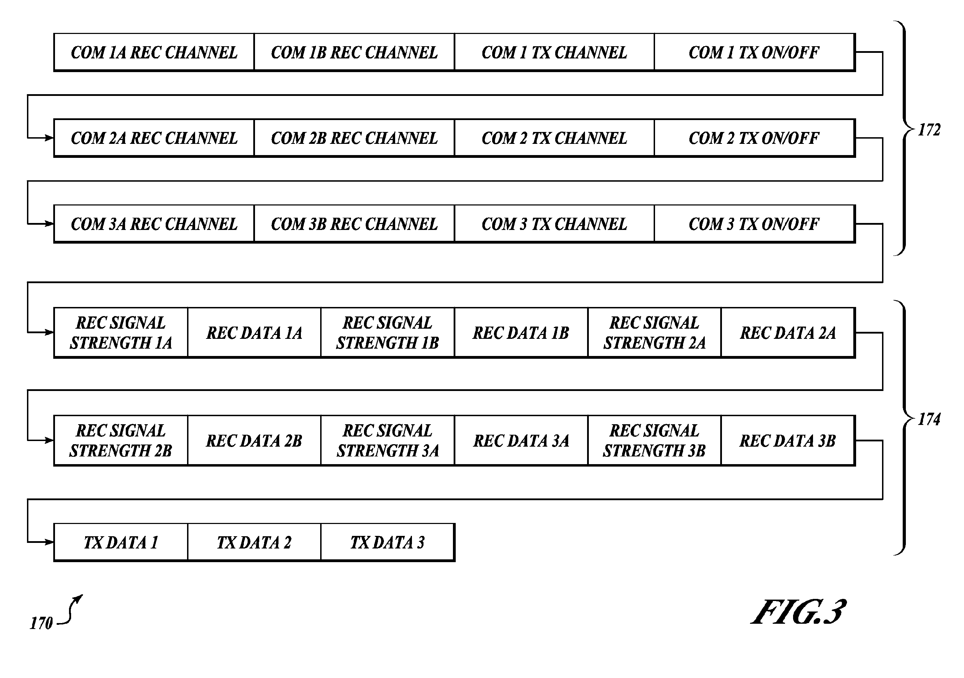

The first and second signals are received using a data bus, such as that described with respect to FIGURE 3, in an example embodiment but are received in other ways in other embodiments. The method also includes sending at least one signal from the DPM 34 to at least one of the audio panel 40 or the display and control computer 50 based on predefined channel switching logic. The predefined channel switching logic includes previously defined channel priority levels, is stored in the DPM 34 or the computer 50 and in some embodiments also includes received signal strength levels.

The audio panel 40 and the display and control computer 50 are also capable of transmitting signals to the DPM 34. The input device 56 is used to receive a channel selection from a pilot, co-pilot, or other user of the system that is used by the processor 52 to send a channel selection input signal to the DPM 34. Information contained in the channel selection input signal is then used by the DPM 34 as a part of the channel switching logic to determine the content of the signal sent from the DPM 34 to at least one of the audio panel 40 or the display and control computer 50. Signals sent from the DPM 34 to the audio panel 40 are first converted from digital to analog form using one or more of the DACs 42, 46 in an example embodiment. However, in other embodiments, initial D/A conversion is not performed before signals are sent from the audio panel 40 to the pilot or copilot devices.

Transmission signals from the audio panel 40 and the display and control computer 50 may include an audio signal intended for transmission or a data signal intended for transmission. These signals are received at the DPM 34. In the case of audio signals, they are first converted from analog to digital form using one or more of the ADCs 44, 48. However, in other embodiments, the audio signals are received in digital form from the audio panel 40 and have no need of initial A/D conversion by the ADCs 44, 48. The channel control line between the display and control computer 50 and the DPM 34 allows the computer 50 to send control information to the DPM 34. The DPM 34 is also capable of sending channel control and transmission mode enablement signals to the MCRs 22, 24, 26. In an example embodiment, the DPM 34 directs transmission data based on a transmission signal received from the audio control panel 40 or the computer 50 to one of the MCRs 22, 24, 26 along with a transmission mode enablement signal over the data bus.

In some examples of the invention, the method of conducting RF communications further includes receiving a third signal from the third MCR 26, the third signal corresponding to at least a fifth channel and a sixth channel and the at least one signal sent from the DPM 34 is based on applying the predefined channel switching logic to the first through sixth channels. The method further includes receiving a combined receive signal at the RF power combiner/splitter 30, splitting the combined receive signal with the RF power combiner/splitter 30 to form a first raw receive signal and a second raw receive signal. The first raw receive signal is received at the second MCR 24 and the second raw receive signal is received at the third MCR 26. In this example, the second signal from the second MCR 24 is based on the first raw receive signal and the third signal from the third MCR 26 is based on the second raw receive signal.

In an additional example, the method also includes receiving a first transmission signal at the DPM 34 from at least one of the audio panel 40 or the avionics control computer 50 and placing a first transmission data signal based on the received first transmission signal on a data bus using the DPM 34. In this example, the method also includes receiving the first transmission data signal using at least one of the first, second, or third MCRs 22, 24, 26 and emitting a first radio transmission signal based on the first transmission data signal from at least one of the MCRs 22, 24, 26 that received the first transmission data signal. Generally, emission of the first radio transmission signal and receiving a raw receive signal are not performed using the same MCR at that same time.

In a further example, the first transmission data signal is received using the second MCR 24 and the first radio transmission signal is emitted from the second MCR 24. Additionally, in this example, a second transmission signal is received at the DPM 34 from at least one of the audio panel 40 or the computer 50, a second transmission data signal based on the received second transmission signal is placed on the data bus using the DPM 34, the second transmission data signal is received using the third MCR 26, and a second radio transmission signal is emitted from the third MCR 26 based on the second transmission data signal. The first and second radio transmission signals are received at the RF power combiner/splitter 30, and a combined transmission signal based on the first and second radio transmission signals is emitted from the RF power combiner/splitter 30. Generally, the RF power combiner/splitter 30 is not used to both receive and emit signals to and from the antenna 32 at the same time.

Many different channels may be used for receiving and transmission. The following are used in an example embodiment of the invention: VHF Digital Link (VDL) at 137 mHz, audio air traffic control (ATC) at 135 mHz, audio ATC handoff at 130 mHz, audio automated surface observing system (ASOS) weather at 128 mHz, and an emergency channel at 121.5 mHz. Additionally, in an example embodiment, each receive and transmit channel may be quickly switched from VDL to 25 kHz audio or 8 KHz audio by a DPM. Each of the channels is assigned a priority level. Priorities are designated simply as priority or non-priority in an example embodiment, but have more gradations in other embodiments, such as being assigned a numeric priority level on a scale from 1 to 7 or any other numeric scale. ATC may have a higher priority than ASOS, and the emergency channel may have the highest priority, for example. In an example embodiment, the priorities are previously determined and described in a priority roster that includes a plurality of channel identifiers along with an associated priority indicator for each channel identifier.

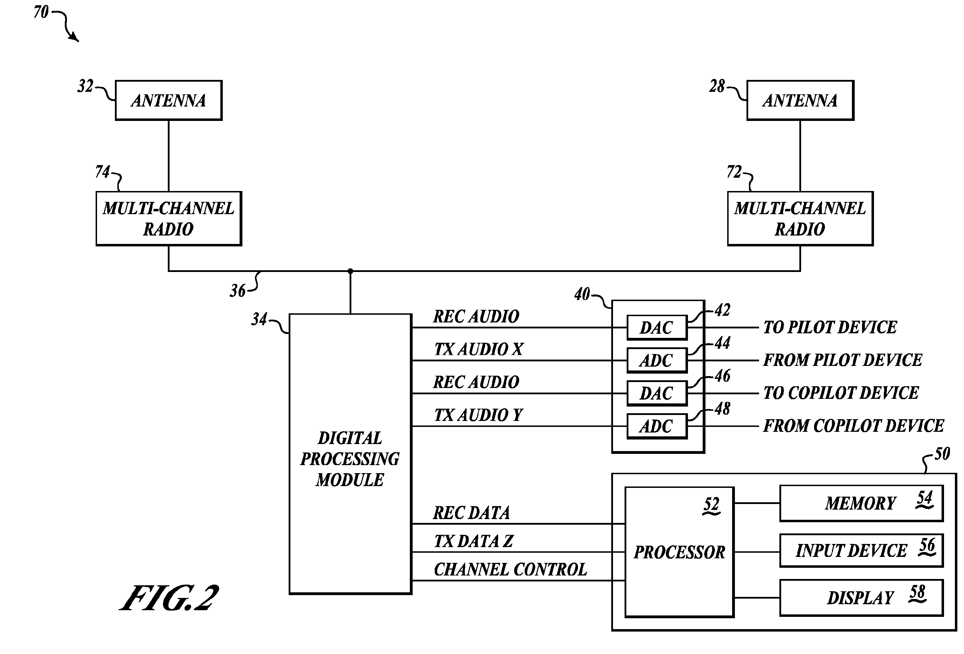

FIGURE 2 is a block diagram showing an avionics communications system 70 using multi-channel radios formed in accordance with an alternate embodiment of the invention. The system 70 is similar to the system 20 shown in FIGURE 1, but rather than including three MCRs and an RF power combiner/splitter, the system 70 includes a first MCR 72 and a second MCR 74. The first MCR 72 is in signal communication with the first antenna 28 and the second MCR 74 is in signal communication with the second antenna 32. Each of the MCRs 72, 74 include two simultaneous receivers and two simultaneous transmitters in an example embodiment, but other MCRs with a minimum of two simultaneous transmitters and two simultaneous receivers are used in other embodiments.

FIGURE 3 is a block diagram showing a time division multiple access (TDMA) data bus format 170 used in a non-limiting embodiment of the invention. The format 170 includes a first portion 172 that includes receive and transmit channel control information for three MCRs designated as Com 1, Com 2, and Com 3. In an example embodiment, Com 1 corresponds to the third MCR 26, Com 2 corresponds to the second MCR 24, and Com 3 corresponds to the first MCR 22 described with respect to the embodiments described in relation to FIGURE 1 that include the RF power combiner/splitter 30. In this example embodiment, control information is included for two channels on each MCR, designated as 'A' and 'B'. However, other embodiments include information for differing numbers of MCRs and/or differing numbers of channels corresponding to each MCR. The first portion 172 also includes a transmission enable control signal sent to each MCR, designated at TX On/Off. The format 170 also includes a second portion 174 that is used to contain receive data for each channel of each MCR and transmission data for each MCR. In an example embodiment, the second portion 174 also includes signal strength information for each receive channel of each MCR. The format 170 may be used for communication between the MCRs 22, 24, 26 and the DPM 34 shown in FIGURE 1, for example. Although a TDMA format is shown, other types of data buses may be used in other embodiments of the invention. The data bus is also used to connect greater numbers of radios than those shown in FIGURE 1 in some embodiments. For example, the data bus is used to connect very high frequency (VHF) communication (COM), high frequency (HF) COM, and satellite (SAT) COM radios in an example embodiment.

The tables that follow illustrate two non-limiting example scenarios for the control of channel presentation by a DPM during various operational modes. In these examples, three MCRs designated as Com1, Com2, and Com3 are used. In an example embodiment, Com 1 corresponds to the third MCR 26, Com 2 corresponds to the second MCR 24, and Com 3 corresponds to the first MCR 22 described with respect to the embodiments described in relation to FIGURE 1 that include the RF power combiner/splitter 30. With respect to the tables, each MCR has two receive channels designated as 'A' and 'B' and one transmit channel. The letters 'X', 'Y', and 'Z' show channel settings for each receive or transmit channel of each MCR. These channel settings originate from a user such as a pilot or copilot and are entered using an input device such as the input device 56 described with respect to FIGURE 1 in an example embodiment. In the examples shown in the tables below, channeling logic in the DPM has optimally programmed Com 1, Com 2, and Com 3 based on the user's channel selection input. The pilot, another user, or a device associated with the pilot or other user also determines whether each of the channels is operating in transmit or receive mode. This mode selection is shown in the 'pilot selected operational modes' column in the tables that follow.

When one of the letters 'X', 'Y', or 'Z' has a symbol '*' in superscript following the letter, this signifies that the DPM is using that function at that moment. Whether the letter has an '*' in superscript or not, data continues to flow to and from each MCR. For the receive case, the DPM controls which MCR's audio is sent to the audio panel. For transmit cases, the DPM controls which MCR is enabled to transmit. Generally, when any transmission takes place using an MCR and a particular antenna, no receive function takes place using the same MCR or the same antenna due to interference with the transmitter. For each table, a pilot or other user has selected channels 'X', 'Y', and 'Z', each of which are selectively used for transmission or reception on either Com1 or Com2. The DPM is in signal communication with Com 1, Com 2, and Com 3, such as by using a data bus similar to the one shown in FIGURE 3. Only two general scenarios are shown in the tables. Many other scenarios exist.

The first example, shown in the first table below illustrates seamless switching of receiving and transmitting functions between MCRs.

| Row | Pilot Selected Operational Modes | Com1A Rec | Com1B Rec | Com1 TX | Com2A Rec | Com2B Rec | Com2 TX | Com3A Rec | Com3B Rec | Com3 TX |
|---|---|---|---|---|---|---|---|---|---|---|
| 1A | Rec X,Y,Z | X* | Y* | X | X | Z | Y | Y | Z* | Z |
| 2A | TX X Rec Y, Z | X | Y | X* | X | Z | Y | Y* | Z* | Z |
| 3A | TX X, Y Rec Z | X | Y | X* | X | Z | Y* | Y | Z* | Z |
| 4A | TX X, Y, Z | X | Y | X* | X | Z | Y* | Y | Z | Z* |

In row 1A, all channels are set to receiving. The DPM is sending through channel 'X' from Com1A, channel 'Y' from Com1B, and channel 'Z' from Com3B. At row 2A, channel 'X' changes from receive to transmit. In response, the DPM switches its source of channel 'Y' receive information from Com1B to Com3A. At row 3A, channel 'Y' changes from receive to transmit. In response, the DPM commands Com 2 to enter a transmit state and to transmit using channel 'Y', such as by using the Com 2 TX ON/OFF and Com 2 TX Channel fields respectively of the data bus shown in FIGURE 3 for example. This switch allows channel 'Z' to continue to be received using Com 3B, which would not have been possible if channel 'Y' were to be transmitted using Com3. At row 4A, channel 'Z' changes from receive to transmit. In response, the DPM allows the channel 'Z' transmission on Com3 since there are no other channels being received using Com 3. When one of the MCRs needs to change from a receive state to a transmit state, the DPM sends a transmit enable signal to the relevant MCR and when one of the MCRs needs to change from a transmit state to a receive state, the DPM changes the transmit enable signal to off. In each of the changes shown in the first table, a channel that was being received on a given MCR was not moved from that MCR during reception and a channel that was transmitting on a given MCR was not moved from that MCR during transmission. This allows seamless reception and transmission to occur.

In the second non-limiting example, shown in the second table below, a change in the MCR used during transmission of a channel is performed.

| Row | Pilot Selected Operational Modes | Com1A Rec | Com1B Rec | Com1 TX | Com2A Rec | Com2B Rec | Com2 TX | Com3A Rec | Com3B Rec | Com 3 TX |
|---|---|---|---|---|---|---|---|---|---|---|
| 1B | TX X, Y, Z | X | Y | X* | X | Z | Y* | Y | Z | Z* |
| 2B | TX X, Z Rec Y | X | Y | X* | X | Z | Z* | Y* | Z | Z |
| 3B | TX X Rec Y, Z | X | Y | X* | X | Z | Y | Y* | Z* | Z |
| 4B | Rec X, Y, Z | X* | Y | X | X | Z | Y | Y* | Z* | Z* |

In row 1B, all channels are transmitting. At row 2B, channel 'Y' changes from transmit to receive. In response, the DPM begins to use Com3A as its source of channel 'Y' receive data. The DPM also switches channel 'Z' transmission from Com3 to Com2. In an example embodiment, a channel is selected as a "victim" channel so that only the victim channel is affected by re-channeling during the course of a transmission, such as that just performed in switching the channel 'Z' transmission from Com3 to Com2 during the course of transmission. At row 3B, channel 'Z' changes from transmit to receive. In response, the DPM begins to use Com3B as its source of channel 'Z' receive data. At row 4B, channel 'X' changes from transmit to receive. In response, the DPM begins to use Com1A as its source of channel 'X' receive data.

Although example methods were described with reference to FIGURE 1, similar methods apply with respect to FIGURES 2 and 3. Additionally, although FIGURES 1 and 2 show a DPM, computer, and audio panel as separate components, some or all of these components may be combined into an integrated processing unit. Also, rather than using a digital signal processor, a DPM may use other processing components such as a field programmable gate array (FPGA) or an application specific integrated circuit (ASIC), for example.

## Claims

1. A method for conducting radio frequency communications using an avionics system including a plurality of multi-channel radios, the method comprising:
receiving a first signal from a first multi-channel radio at a processor, the first signal corresponding to at least a first channel and a second channel;
receiving a second signal from a second multi-channel radio at the processor, the second signal corresponding to at least a third channel and a fourth channel; and
sending at least one signal from the processor to at least one of an audio panel or an avionics control computer based on predefined channel switching logic.

2. The method of Claim 1, further comprising receiving a channel selection input signal at the processor from the avionics control computer, wherein the predefined channel switching logic is based on previously assigned channel priority levels and received signal strength levels, and wherein sending at least one signal from the processor is also based on the received channel selection input signal..

3. The method of Claim 1, further comprising:
receiving a transmission signal at the processor from at least one of an audio panel or an avionics control computer; and
sending a control signal from the processor to at least one of the first and second multi-channel radios,
wherein the control signal contains information directing at least one of the first and second multi-channel radios to operate in a transmit mode.

4. The method of Claim 1, further comprising receiving a third signal from a third multi-channel radio at the processor, the third signal corresponding to at least a fifth channel and a sixth channel, wherein the at least one signal sent from the processor is based on application of the predefined channel switching logic to the first through sixth channels.

5. The method of Claim 4, further comprising:
receiving a combined receive signal at a radio frequency (RF) power combiner/splitter;
splitting the combined receive signal with the RF power combiner/splitter to form a first raw receive signal and a second raw receive signal;
receiving the first raw receive signal at the second multi-channel radio;
receiving the second raw receive signal at the third multi-channel radio;
receiving a first transmission signal at the processor from at least one of the audio panel or the avionics control computer;
placing a first transmission data signal based on the received first transmission signal on a data bus using the processor;
receiving the first transmission data signal using at least one of the first, second, or third multi-channel radios;
emitting a first radio transmission signal based on the first transmission data signal from at least one of the multi-channel radios that received the first transmission data signal;
receiving a second transmission signal at the processor from at least one of the audio panel or the avionics control computer;
placing a second transmission data signal based on the received second transmission signal on the data bus using the processor;
receiving the second transmission data signal using the third multi-channel radio;
emitting a second radio transmission signal based on the second transmission data signal from the third multi-channel radio;
receiving the first and second radio transmission signals at the RF power combiner/splitter; and
emitting a combined radio transmission signal based on the first and second transmission signals from the RF power combiner/splitter,
wherein the second signal from the second multi-channel radio is based on the first raw receive signal and the third signal from the third multi-channel radio is based on the second raw receive signal,
wherein emission of the first radio transmission signal and receiving a raw receive signal are not performed using the same multi-channel radio at the same time,
wherein the first transmission data signal is received using the second multi-channel radio, and
wherein the first radio transmission signal is emitted from the second multi-channel radio.

6. An avionics communications system comprising:
a first multi-channel radio configured to receive at least a first channel and a second channel;
a second multi-channel radio configured to receive at least a third channel and a fourth channel; and
a processor in signal communication with the first and the second multi-channel radios, wherein the processor is configured to send at least one signal to at least one of an audio panel or an avionics control computer based on applying predefined channel switching logic to the first through fourth channels.

7. The system of Claim 6, further comprising an avionics control computer in signal communication with the processor, the avionics control computer including an input device, wherein the channel switching logic is based on previously assigned channel priority levels stored in the processor, and wherein the avionics control computer is capable of sending a channel selection input signal to the processor based on user input received at the input device.

8. The system of Claim 6 wherein the processor is capable of receiving a transmission signal from at least one of an audio panel or an avionics control computer, and wherein the processor is capable of sending a control signal containing information directing at least one of the first and second multi-channel radios to operate in a transmit mode to at least one of the first and second multi-channel radios.

9. The system of Claim 6, further comprising a third multi-channel radio configured to receive at least a fifth channel and a sixth channel, the third multi-channel radio in signal communication with the processor, wherein the processor is configured to send at least one signal to at least one of an audio panel or an avionics control computer based on applying predefined channel switching logic to the first through sixth channels.

10. The system of Claim 9, further comprising:
a radio frequency (RF) power combiner/splitter in signal communication with the second multi-channel radio over a first connection and in signal communication with the third multi-channel radio over a second connection,
wherein the RF power combiner/splitter is capable of receiving a combined receive signal and forming a first raw receive signal on the first connection and a second raw receive signal on the second connection,
wherein the processor is capable of receiving a first transmission signal from at least one of the audio panel or the avionics control computer,
wherein the processor is capable of placing a first transmission data signal based on the first transmission signal on a data bus connected to the first and second multi-channel radios,
wherein at least one of the multi-channel radios are capable of emitting a first radio transmission signal based on the first transmission data signal,
wherein the processor is capable of receiving a second transmission signal from at least one of the audio panel or the avionics control computer,
wherein the processor is capable of placing a second transmission data signal based on the second transmission signal on the data bus,
wherein at least one of the multi-channel radios are capable of emitting a second radio transmission signal based on the second transmission data signal, and
wherein the RF power combiner/splitter is capable of receiving the first and second transmission signals and is capable of emitting a combined transmission signal based on the first and second radio transmission signals.
